# EUROPEAN PATENT APPLICATION

(11) **EP 2 840 567 A1**
(43) Date of publication of application: **25.02.2015**
(21) Application number: 13778936.8
(22) Date of filing: 17.04.2013
(51) Int. Cl.: G09G 3/18

(54) **VENDING MACHINE COMPRISING AN INTEGRATED TRANSLUCENT LCD**

(30) Priority: 18.04.2012 ES 201230422
(71) Applicant: Crambo, S.A., 28850 Torrejón de Ardoz (Madrid) (ES); Garcia Manchado, Nilo, 28850 Torrejon De Ardoz (ES); Garcia Manchado, Julio Cesar, 28850 Torrejon de Ardoz (Madrid) (ES)
(72) Inventor: GARCIA MANCHADO, Nilo, 28850 Torrejon de Ardoz (Madrid) (ES); GARCIA MANCHADO, Julio Cesar, 28850 Torrejon de Ardoz (Madrid) (ES)
(74) Representative: Sahuquillo Huerta, Jesús
(86) International application number: PCT/ES2013/070244
(87) International publication number: WO 2013/156651

(57) **Abstract**

The invention relates to a vending machine comprising an integrated translucent or transparent LCD element, of the type that are used to sell products, said machine comprising a chassis (100) open on one side (3), the opening (3) being covered by a transparent or translucent LCD panel (2) in the form of a door, and containing a light source, said elements being connected and controlled by a computer (8) comprising a plurality of white LEDs (41) arranged peripherally around the inside of the LCD screen (2) and perpendicularly oriented towards the inside (101) of the machine, which is entirely white.

## Description

The object of the present invention is a vending machine, especially those of the type found in public spaces operated upon payment, as the popular vending machines or refrigerators for sale in shopping centres and similar, incorporating a large translucent LCD touch screen, likely to be used for the selection of the product, or for displaying specific of different commercial messages.

### State of the art

To date, there are known vending machines characteristic of any commercial establishment, wherein by means of the prior payment of the product, this is provided to the user. These machines generally have large showcases or display cabinets, through which it is possible to see the products housed in its interior to decide which of them will be taken, without any interaction between the user and the machine, except the payment for the product. In addition, a significant problem in this type of machines problem is the absence of additional information about the products that you want to acquire, since the products are often placed in such a way that, for example, it is impossible to know its composition or, even, if the expiration date has been exceeded.

The same applies in commercial refrigerators, wherein there is no kind of interaction with the user, and where, in addition, in many cases forces the user to open the abovementioned refrigerator, with the consequent loss of cold and the problems associated with higher power consumption, since at shorts intervals said refrigerator is open, and even in shopping malls with regulated temperature, the cover itself is disregarded to avoid its wear and facilitate the acquisition by the user.

The document ES 2 377 288 describes a personalised multi-service system for vending machines that seeks a greater interaction with the user, since it describes a local station with a CPU, a presence detector that emits detection signals when it detects the presence of a person, a video camera, a visualisation screen, an audio system, telecommunication means for establishing communications with a remote station via an Internet domain; actuating means for activating a client attention mode via said Internet domain by means of videoconference communications between the remote station and the user. All this in such a way that the CPU activates the telecommunication means, the video system and the audio system in the client attention service mode, when it receives the detection signal and the actuating means have been actuated, maintaining the client assistance mode while the CPU continues to receive detection signals.

### Description of the invention

The technical problem which solves the present utility model is the interactivity of the vending machine with the user. It is an object of the present invention than the machine itself, when detecting the presence of the user, for example, by means of a webcam video camera, sets, through the generic recognition of the person (for example, if it is male or female, stature, features of the different ages) a series of sales parameters which will be displayed through the door or showcase itself of the machine, which consists of a translucent or transparent LCD panel occupying a substantial part of the whole of the machine and which will display the offering of products to the identified person (all or only a portion). In addition, by means of the touch-sensitive layer integrated into the translucent LCD panel will be possible the user interacts directly on the machine by selecting the desired product on the screen itself and obtaining the information he/she wants, since both the LCD panel and the management of the touch-sensitive layer and detection through the video camera is managed by a computer integrated into the machine itself.

The computer also manages the common payment means, commons and standards to all these types of machines. In addition, the computer will be connected to NFC-type phone payment means (NFC, Near Field Communication, a wireless communication technology, of short range and high frequency that allows for exchange of data without between devices at least 10 cm apart. It is a simple extension of ISO 14443 standard (RFID)). However, one of the advantages of the invention is its versatility, so other means of payment means equivalent to those described and obvious to a person skilled in the art could be easily programmed.

Similarly, the machine in a particular embodiment will be networked to other machines, or to an external server that updates data of the same.

Throughout the description and claims, the word "comprises" and its variations are not intended to exclude other technical features, additives, components or steps. For those skilled in the art, other objects, advantages and characteristics of the invention will emerge in part from the description and in part from the practice of the invention. The following examples and drawings are provided by way of illustration, and are not intended to be limiting of the present invention. Furthermore, the present invention covers all the possible combinations of particular and preferred embodiments herein indicated.

### Brief description of the figures

There follows a very brief description of a series of drawings that help to provide a better understanding of the invention and which are associated expressly with an embodiment of said invention that is presented as a non-limiting example thereof.

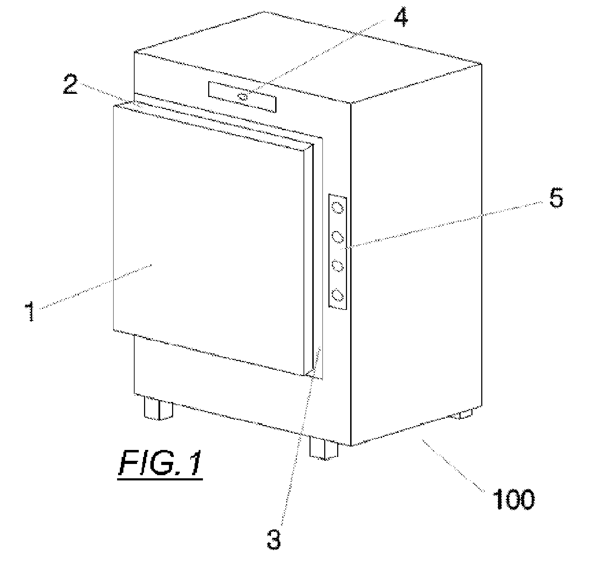

- Figure 1: shows an exploded schematic view of the vending machine object of the present invention;
- Figure 2: shows a connection diagram between the different elements that make up the vending machine, object of the present invention;
- Figure 3: shows a block diagram of the computer (8) that integrates the machine object of the present invention;
- Figure 4: shows a perspective view of the vending machine object of the present invention; and

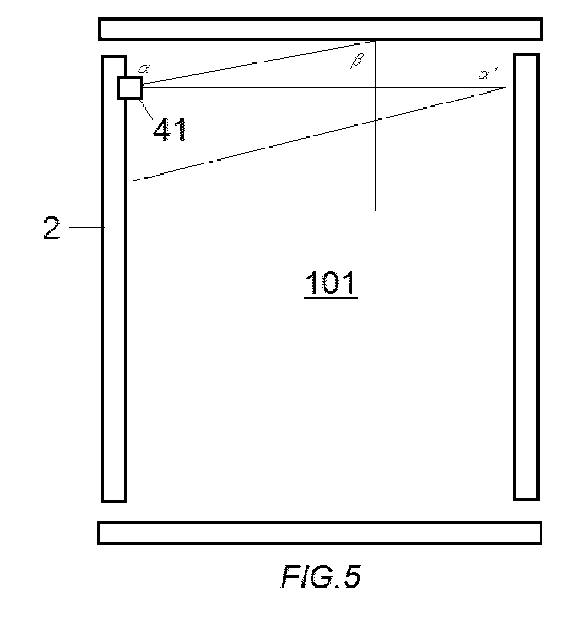

- Figure 5: shows a scheme of the optical behaviour of the light source inside the vending machine.

### Description of a detailed embodiment of the invention

As shown in the accompanying figures, the vending machine comprising an integrated translucent or transparent LCD element, of the type that are used to sell products upon payment thereof in commercial establishments, comprises, essentially, a chassis (100) open on one side (3) and payment and selection means (5) and characterized in that said opening (3) is covered by a transparent or translucent LCD panel (2) incorporating a touch-sensitive layer (1), said elements being connected and controlled by a computer (8), that is embedded in the machine itself.

In addition, it is essential that there is a light source inside the machine, so that the LCD panel (2) can fulfil its role. Said light source, in a particular embodiment, only is operational when someone close to the machine has been detected, by means of a presence detector.

Thanks to this structure, the information contained on the computer (8) can be displayed on the LCD panel (2) itself, so that the user can interact with the same (and therefore with the machine through the computer) through the touch-sensitive layer (1) arranged on the panel (2), substantially with the same size and that is connected to an input of the computer (8) itself.

The machine comprises a video camera (4) connected to the computer (8). This camera (4) is configured to detect the presence of a potential user and, where possible, identify its most characteristic features, in such a way that only the products most appropriate for the possible user are offered. A possible case is the detection of the presence of a child, where it would be avoided the offering of alcoholic beverages or tobacco.

In a logical manner, the machine comprises product payment elements (5) connected to the computer (8) and which are common to this type of machines (coin, banknote or credit card payment, for example).

However, the machine also offers a NFC phone payment element (7) connected to the computer (8) and configured for connection to a mobile phone (300). The NFC is a wireless communication technology, of short range and high frequency that allows for exchange of data without between devices at least 10 cm apart. It is a simple extension of ISO 14443 standard (RFID). As in ISO 14443, NFC communicates through induction into a magnetic field, wherein two spiral antennas are placed within their respective near fields. It works in the 13.56 MHz range, which requires no license for its use nor is subject to any restriction. It supports two operating modes; all the devices of standard NFCIP-1 must support both modes:
- Active: Both devices generate their own electromagnetic fields that are used to transmit their data.
- Passive: Only one device generates the electromagnetic field and the other takes advantage of the charge modulation to transfer data. The initiator of communication is in charge of generating the electromagnetic field.

The NFCIP-1 protocol may function at different rates such as 106, 212, 424 or 848 Kbit/s. According to the environment in which it works, both parties may agree at what rate to work on and readjust the parameter at any moment of communication.

Finally, the machine comprises network communication means (6) connected to the computer (8) and configured for connection to an external server (200).

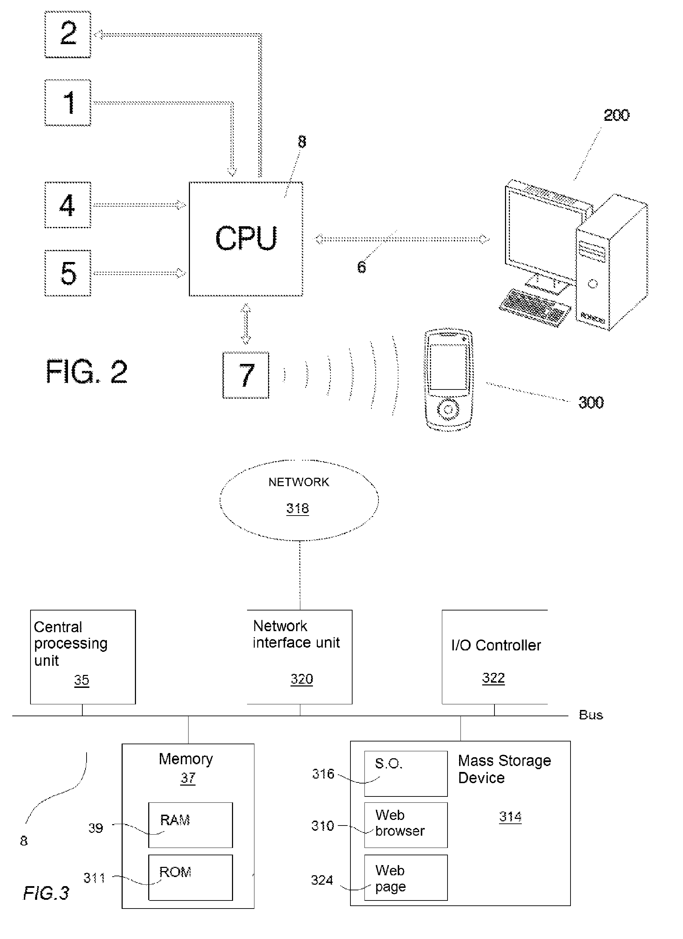

More specifically, as can be seen in Figure 3, an illustrative architecture for the computer (8) utilized in the various embodiments of the invention will be described. The computer architecture (8) shown in Figure 3 illustrates an embedded computer, including a central processing unit 35 (CPU), a system memory 37, including a random access memory 39 (RAM) and a read-only memory (ROM) 311, and a system bus 312 that couples the memory to the CPU 35.

A basic input/output system containing the basic routines that help to transfer information between elements within the computer, such as during start-up, is stored in the ROM 311. The computer 8 further includes a mass storage device 314 for storing an operating system 316, application programs, and other program modules, which will be described in greater detail below.

The mass storage device 314 is connected to the CPU 35 through a mass storage controller (not shown) connected to the bus 312. The mass storage device 314 and its associated computer-readable media provide non-volatile storage for the computer 8. Although the description of computer-readable media contained herein refers to a mass storage device, such as a hard disk or CD-ROM drive, it should be appreciated by those skilled in the art that computer-readable media can be any available media that can be accessed by the computer 8.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, digital versatile disks ("DVD"), or other optical storage, magnetic cassettes, magnetic tape, magnetic disk storage or other magnetic storage devices, or any other medium which can be used to store the desired information and which can be accessed by the computer 8.

According to various embodiments of the invention, the computer 8 may operate in a networked environment using logical connections to remote computers through a network 318, such as the Internet. The computer 8 may connect to the network 318 through a network interface unit 320 connected to the bus 312. It should be appreciated that the network interface unit 320 may also be utilized to connect to other types of networks and remote computer systems. The computer 8 may also include an input/output controller 22 for receiving and processing input from a plurality of other devices, including a keyboard, electronic stylus (not shown in Figure 3). Similarly, an input/output controller 322 provides the input and output to a LCD screen (2) of the vending machine.

As mentioned briefly above, a number of program modules and data files may be stored in the mass storage device 314 and RAM 39 of the computer 2, including an operating system 316 suitable for controlling the operation of a networked personal computer, such as the WINDOWS® .operating system from MICROSOFT CORPORATION®. The mass storage device 314 and RAM 39 may also store one or more program modules. In particular, the mass storage device 314 and the RAM 39 may store a Web browser application program 10. As known to those skilled in the art, the Web browser application program 310 is operative to request, receive, render, and provide interactivity with electronic documents, such as a Web page 324 that has been formatted using HTML. Moreover, the Web browser application program 310 may be operative to execute scripts contained in the Web page 324, such as for example scripts utilizing the JAVASCRIPT language from SUN MICROSYSTEMS, INC. According to one embodiment of the invention, the Web browser application program 310 comprises the INTERNET EXPLORER Web browser application program from MICROSOFT CORPORATION. It should be appreciated, however, that other Web browser application programs from other manufacturers may be utilized to embody the various aspects of the present invention, such as the FIREFOX Web browser application from MOZILLA FOUNDATION.

In particular, the Web page 324 may include HTML and scripts which, when displayed by the Web browser application 310, provide a visual display of a program or programs stored on the computer 8. Moreover, the scripts included in the Web page 324 allow a user of the computer to interact with the display provided by the Web browser application 310 and modify the application 310.

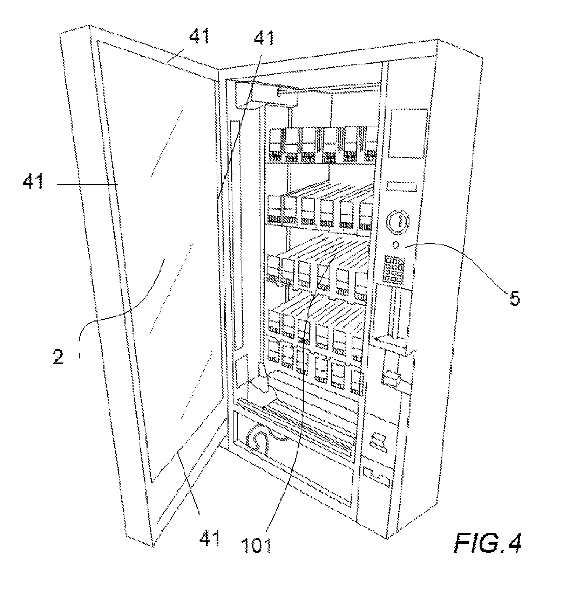

In an embodiment of the invention shown in Figure 4, the vending machine can be seen in detail. The LCD screen 2 occupies practically the entire useful surface of the machine door, which for convenience, in this representation is open.

As indicated, the conventional vending machines include an internal light source. However, these light sources are of flash type and after various tests and trials, it is observed that said light source prevents a correct contrast and visibility of the LCD screen 2, which logically is an issue in these applications.

One of the objects of the present invention is to increase the user experience or usability of the machine, increasing the interaction with the user, for which the LCD screen 2 is provided and, in a practical embodiment, said LCD screen 2 is also tactile. It is for this reason that the vending machine incorporates an embedded computer 8 with network communication capability and all the functionalities of an advanced computer system, which would make possible, even, the possibility of establishing network games, communication with social networks, participation in promotions among other multiple advantages of converting the vending machine into a complete terminal connected to the network, as shown in the present specification. However, this is only possible if the LCD screen 2 itself is displayed correctly, while allowing the observation of the marketed products.

For a correct visualization, after different tests it has been shown that said internal lighting must be reflexive, i.e., it should be reflected in the interior walls of the machine, without shining directly on the LCD screen 2, since it would dazzle the user and the visualization and practical use thereof would be practically impossible. On the other hand, as indicated, the light should be fully reflected, in such a way that it is oriented towards the LCD screen 2 so that the user can see the projection of images on the same.

The solution to this technical problem is the combination of two elements: a plurality of white LEDs 41 arranged occupying the entire perimeter of the LCD screen 2 and perpendicularly oriented towards the inside 101 of the machine. In this way, the reflection of light affects the LCD screen 2 itself with an angle α' being backlighted in this manner. Note that the LEDs 41 arranged on the left and right sides of the LCD screen 2 also shine on the bottom of inside 101 of the machine fulfilling the same effect as those of the upper and lower part.

It is also well known that white LEDs 41 do not emit in a single direction but, like any light emitter, have a certain dispersion with an angle α that would reflect on the adjacent walls and/or is oriented towards the area of the product with an angle β, so the dual mission of illuminating the inside and the LCD screen 2 is fulfilled.

It should be also noted the influence of ambient light in the visibility of the LCD screen 2. To diminish this effect, the machine incorporates brightness detector allowing computer 8 to set the required power in the white LEDs 41, which will be variable depending on the ambient light. Such power regulation does not have to be exclusive or related to the ambient light, but it can also be adjustable for other reasons.

It has been suggested that the white light emitted by the LEDs 41 must be reflected in the inside 101 of the machine. Therefore, it is essential that (a) the LED 41 is white and (b) that the inside 101 of the machine is entirely white to facilitate the reflection, since other colour would absorb certain visible light range and harm the visibility of the LCD screen 2. Within the white colours, it would be preferable a dull, matt, white colour, since brightness is seen through the screen and harms the visibility.

To obtain an inside 101 completely white, it is also preferable that vents of the machine are also painted in white and/or have a white cover sheet or plate that does not prevent, logically, its function. Similarly, the extraction carts of product, trays of product and pushers must be preferably white, in order to not alter the visibility of the inside.

Internally, the machine is provided with an additional camera that allows recognizing the products housed inside, so that the computer 8 comprises programs to link automatically the products and quantities available with the virtual offering through the LCD screen 2, increasing the interaction with the user. One of the advantages of the invention is, therefore, to have fully updated the stock of products that, through the remote communication, would allow a remote control of the machine, reducing the maintenance costs. This internal camera and the computer 8 also enable the remote control or implementation of any protocol that allows, when a product is reaching its expiration date, establishing a versatile sale, reducing its price or offering that product (for example, with a two-for-one). Thus, the machine could be updated in prices and capabilities in a remote manner.

The versatility that gives the embedded computer 8 makes possible the implementation of, for example, algorithms for controlling the return in case of change, which will be displayed on the screen 2. So, if there is no change or this is close to the exhaustion, the screen 2 indicates to the user what currencies, or payment means are accepted and which not, and even what return the machine will make, for example, *'you are advised that the change will be in 5-cent coins'* so that the user can decide the purchase or not.

The interaction with the user is permanent, for which the machine may be provided with a touchpad or a smaller screen housed in the inside (101) of the machine, such as for example in the transport carriage or robotic arm that provides the product purchased, with any additional message intended for the user. In addition, the machine can incorporate a microphone and speakers, as well as side display screens.

## Claims

1. Vending machine comprising an integrated translucent or transparent LCD element, of the type that are used to sell products, said machine comprising a chassis (100) open on one side (3), the opening (3) being covered by a transparent or translucent LCD panel (2) in the form of a door, and containing a light source, said elements being connected and controlled by a computer (8), **characterized in that** said light source consists of a plurality of white LEDs (41) arranged peripherally around the inside of the LCD screen (2); said white LEDs (41) being perpendicularly oriented towards the inside (101) of the machine, said interior (101) being entirely white.

2. Machine according to claim 1, wherein the transparent or translucent LCD panel (2) incorporates a touch-sensitive layer (1).

3. Machine according to any of claims 1 and 2, wherein it also comprises a video camera (4) connected to the computer (8).

4. Machine according to any of claims 1 to 3, wherein it also comprises product payment elements (5) connected to the computer (8).

5. Machine according to any of the preceding claims, wherein it also comprises a NFC phone payment element (7) connected to the computer (8) and configured for connection to a mobile phone (300).

6. Machine according to any of the preceding claims, wherein it also comprises network communication means (6, 318) connected to the computer (8) and configured for connection to an external server (200).

7. Machine according to any of the preceding claims, wherein the light source housed inside only is operational when a person is detected close to the machine with a presence detector.

8. Machine according to any of the preceding claims, where the white is matt.

9. Machine according to any of the preceding claims, where the plurality of white LEDs (41) will have variable power.

10. Machine according to any of the preceding claims comprising an inner video camera and oriented towards the products housed in the inside (101) of the machine.

11. Machine according to any of the preceding claims incorporating at least a speaker and/or at least a microphone and/or an additional screen in at least a portion of one side.
